# EUROPÄISCHE PATENTSCHRIFT

(11) **EP 0 978 666 B1**
(45) Veröffentlichungstag und Bekanntmachung des Hinweises auf die Patenterteilung: **28.05.2003**
(21) Anmeldenummer: 99115283.6
(22) Anmeldetag: 02.08.1999
(51) Int. Cl.: F16G 11/02

(54) **Pressfitting aus Stahl und Verfahren zu dessen Herstellung**
Swaged steel fitting and method of its manufacture
Pièce de raccord sertie en acier et son procédé de fabrication

(30) Priorität: 07.08.1998 DE 29814074 U
(43) Veröffentlichungstag der Anmeldung: 09.02.2000
(73) Patentinhaber: Pfeifer Holding GmbH & Co. KG, 87700 Memmingen (DE)
(72) Erfinder: Stauske, Dieter, 87700 Memmingen (DE); Hoyer, Peter, 87751 Heimertingen (DE)
(74) Vertreter: Pfister, Helmut, Dipl.-Ing.

(56) Entgegenhaltungen:
- EP-A- 0 802 347
- FR-A- 1 571 372
- US-A- 3 471 904

## Beschreibung

Die Erfindung betrifft einen Preßfitting aus Stahl zur Herstellung einer Verbindung des Preßfittings mit einem Drahtseil, wobei der Preßfitting einen Kanal aufweist, der mindestens einen Strang des Drahtseils aufnimmt und der Preßfitting einen oberflächlichen Korrosionsschutz besitzt, der dadurch gewonnen ist, daß der Preßfitting vor dem Verpressen mit dem Drahtseil zunächst feuerverzinkt und anschließend in eine schmelzflüssige, eutektische Legierung von Zink und ca. 5 % Aluminium eingetaucht wird. Die Erfindung betrifft ferner ein Verfahren zur Herstellung eines derartigen Preßfittings.

Ein Preßfitting der vorstehend angegebenen Gattung ist bekannt geworden durch das Dokument EP 0 802 347 A 1. Dort ist ein Verfahren zur Herstellung einer Verbindung zwischen einem aus Stahl bestehenden Preßfitting einerseits und einem Drahtseil andererseits beschrieben, wobei der Preßfitting zunächst feuerverzinkt wird und wobei anschließend der Preßfitting in eine schmelzflüssige, eutektische Legierung von Zink und ca. 5 % Aluminium eingetaucht wird. Schließlich wird der Preßfitting auf das Drahtseil aufgepreßt, wobei der Preßvorgang auch durch Walzen oder Rollen erfolgen kann und wobei ein Teil des Preßfittings, der das Drahtseil aufnimmt, eine Durchmesserverringerung und eine Längenvergrößerung erfährt. Diese bekannte Ausbildung eines Preßfittings mit einem besonderen Oberflächenschutz hat den Vorteil, daß der Oberflächenschutz auch trotz der Verformung, das heißt der Durchmesserverringerung und Längenvergrößerung, erhalten bleibt, da der beschriebene Oberflächenschutz derartigen Verformungen folgen kann und verhindert wird, daß der Oberflächenschutz die Oberfläche des Fittings nur noch ungenügend abdeckt.

Unter ungünstigen Bedingungen, insbesondere bei hohen Zugspannungen, kann es zu Gleiterscheinungen des eingepreßten Drahtseiles kommen. Obwohl beim Preßvorgang in der Regel das Material des Preßfittings auch in die freien Räume zwischen den Drähten oder Litzen des Drahtseils eindringt und somit nicht nur eine kraftschlüssige, sondern auch eine formschlüssige Verbindung gegeben ist, führen die besonderen Eigenschaften des beschriebenen Oberflächenschutzes zu einem Gleiten des Drahtseils in dem Kanal bzw. in der Bohrung des Preßfittings.

Es ist Aufgabe der Erfindung, den bekannten Preßfitting dahingehend weiterzuentwickeln, daß auch bei hohen Belastungen Relativbewegungen zwischen dem Drahtseil und dem Preßfitting ausgeschlossen sind.

Zur Lösung dieser Aufgabe geht die Erfindung aus von einem Preßfitting der eingangs angegebenen Gattung. Erfindungsgemäß wird vorgeschlagen, daß der oberflächliche Korrosionsschutz im wesentlichen nur auf den Außenflächen des Preßfittings aufgebracht ist, während der das Drahtseil aufnehmende Kanal mindestens weitgehend von diesem Korrosionsschutz freigehalten ist.

Der Kanal kann beispielsweise ganz vom Korrosionsschutz freigehalten sein, und zwar dadurch, daß der Kanal erst nach dem Feuerverzinken ausgebohrt wird. Bei einer Variante der Erfindung wird der Preßfitting, der schon den Kanal besitzt, in der beschriebenen Weise feuerverzinkt und in die beschriebene schmelzflüssige, eutektische Legierung eingetaucht, und anschließend wird der Kanal jedoch nachgebohrt, aufgerieben oder in anderer spanender Weise bearbeitet, um den Oberflächenschutz im Kanal wieder zu beseitigen.

Im allgemeinen wird beim Aufbohren der Korrosionsschutz im Kanal vollständig beseitigt. Es ist aber auch möglich, das Aufbohren, Aufreiben oder dergleichen dahingehend abzuwandeln, daß die Schicht, die den Korrosionsschutz ergibt, nicht vollständig beseitigt ist, sondern bezüglich ihrer Schichtstärke nur stark vermindert ist. Auf diese Weise läßt sich die Neigung zum Gleiten stark reduzieren, so daß sie unbeachtlich ist.

Bei einer anderen Variante der Erfindung ist vorgesehen, daß der Kanal an dem Ende, an dem das Drahtseil aus dem Kanal austritt, einen rohrförmigen Teil besitzt, der die Korrosionsschutzschicht aufweist. Es wird also nur der innere Kanal aufgebohrt. Gegebenenfalls ist hierbei auch ein Drehvorgang notwendig. Besser ist es jedoch, die Bohrung mit einem Absatz auszubilden, der einen etwas größeren Durchmesser besitzt, in welchem Bereich dann der Oberflächenschutz erhalten wird, während der Kanal bzw. der innere Teil einer Nachbehandlung unterworfen wird. Ein Preßfitting dieser Art kann bezüglich des Kanals bzw. des rohrförmigen TEils einfach durch Bohrvorgänge erhalten werden.

Bei einer anderen Variante wird zunächst eine kurze Bohrung hergestellt, die in der erwähnten Weise feuerverzinkt wird. Anschließend wird die Aufnahmebohrung bzw. der Kanal für das Drahtseil eingebracht.

Der rohrförmige Teil, der mit einem Oberflächenschutz versehen ist, kann etwa 10 mm lang sein und bleibt bei der Berechnung der übertragbaren Kräfte zwischen Drahtseil und Preßfitting unbeachtet. Beim Preßvorgang läßt sich auf diese Weise ein völliger Verschluß des Kanals erreichen, so daß Korrosionsprobleme nicht oder nur stark vermindert auftreten.

Der Umstand, daß der innere Teil der Bohrung bzw. des Kanals nicht oder nur wenig beschichtet ist und somit keinen oder nur einen mäßigen Korrosionsschutz besitzt, ist in der Regel von geringerer oder nebensächlicher Bedeutung. Der Preßfitting selbst ist mit einer ausreichenden Wandstärke versehen, so daß geringfügige Korrosionen nicht zu einer Beeinträchtigung der Festigkeitswerte führen.

Selbstverständlich können bei der Erfindung auch die üblichen Mittel angewandt werden, die Hohlräume im Drahtseil aufzufüllen, beispielsweise durch ein Gel oder ähnliche Mittel, die ein Eindringen von Feuchtigkeit von vornherein ausschließen.

Auch die Aufbringung von Schichten anderer Art zur Verbesserung des Oberflächenschutzes im Bereich des Kanals, der das Drahtseil aufnimmt, ist möglich.

In weiterer Ausbildung der Erfindung kann vorgesehen sein, daß die verpressung des Drahtseils unter Verwendung von scharfkantigem, feinkörnigem Material erfolgt. Ein solches Material ist beispielsweise Korundpulver, Quarzsand oder dergleichen. Beim Zusammenpressen des Preßfittings zur Herstellung der Verbindung durchsticht dieses Material mit seinen Kanten die Verzinkungsschicht auf dem Drahtseil bzw. den Drahtseillitzen, und es entsteht ein Verklammerungseffekt, und zwar in dem Sinne, daß auch eine geringe Verzinkung bzw. ein Oberflächenschutz durch Eintauchen in eine schmelzflüssige, eutektische Legierung von Zink und ca. 5 % Aluminium keine Gleitwirkung mehr äußern kann. Das eingebrachte Pulver ergibt einen direkten Halt des Drahtseils im Preßfitting.

In der Zeichnung sind einige Ausführungsbeispiele der Erfindung schematisch dargestellt.

Es zeigen:
- Fig. 1: eine Ansicht eines Preßfittings gemäß der Erfindung, der auf ein Drahtseil aufgepeßt ist,
- Fig. 2: einen Längsschnitt eines Teils der Darstellung der Fig. 1 in einem anderen Maßstab und
- Fig. 3: eine Variante zur Darstellung der Fig. 2.

Der in der Zeichnung dargestellte Preßfitting 1 ist als Gabelfitting ausgestaltet. Die beiden Gabelarme 5 und 6 besitzen je eine Bohrung 7 für einen Bolzen 8.

Der Teil 9 des Fittings ist hülsenförmig bzw. kanalförmig gestaltet, und der Kanal 4 nimmt das Drahtseil 3 auf. Durch den Preßdruck auf den Teil 9 verformt sich dieser, so daß das Drahtseil 3 sicher im Kanal 4 festgehalten ist.

Die gesamte Außenfläche 1 des Preßfittings ist mit einem Oberflächenschutz der oben beschriebenen Ausbildung versehen, und dieser Oberflächenschutz erstreckt sich sowohl über die Gabelarme 5 und 6 als auch über die Außenfläche des Teils 9.

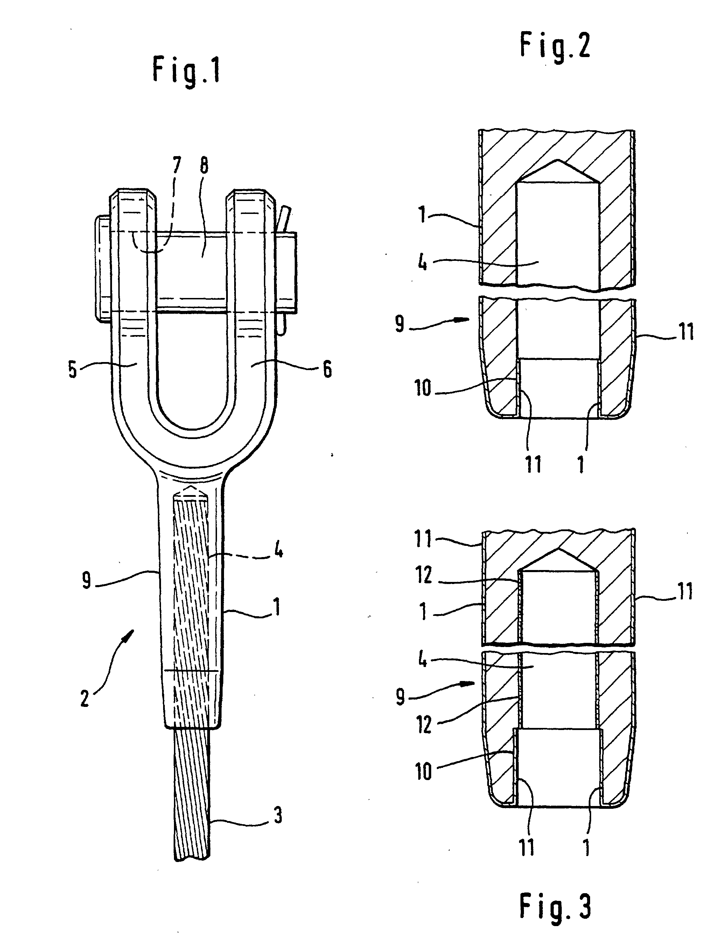

Die Darstellungen der Fig. 2 und 3 zeigen Teile des Preßfittings vor der Verpressung. Der Kanal 4 ist im wesentlichen ohne Oberflächenschutz. Günstig ist es, wenn der rohrförmige Teil 10 einen Oberflächenschutz besitzt.

Beim Ausführungsbeispiel nach der Fig. 2 ist der Durchmesser des Teils 10 im wesentlichen gleich dem Durchmesser des Kanals 4. Im Ausführungsbeispiels nach der Fig. 3 ist dagegen der Teil 10 mit einem etwas größeren Durchmesser gestaltet, so daß der Kanal 4, der das Drahtseil fixiert, durch einfaches Ausbohren gewonnen werden kann. Die Innenfläche des Kanals 4 kann eine Beschichtung 12 aus Korundpulver oder Quarzsand aufweisen.

Die Beschichtung des Preßfittings 1, die den beschriebenen Korrosionsschutz ergibt, ist zum Beispiel etwa 100 bis 200 µ (also 0,1 bis 0,2 mm dick). Sie ist in den Fig. 2 und 3 als dünne Schicht 11 angedeutet.

## Patentansprüche

1. Preßfitting aus Stahl zur Herstellung einer Verbindung des Preßfittings mit einem Drahtseil, wobei der Preßfitting einen Kanal aufweist, der mindestens einen Strang des Drahtseils aufnimmt und der Preßfitting einen oberflächlichen Korrosionsschutz besitzt, der dadurch gewonnen ist, daß der Preßfitting vor dem Verpressen mit dem Drahtseil zunächst feuerverzinkt und anschließend in eine schmelzflüssige, eutektische Legierung von Zink und ca. 5 % Aluminium eingetaucht wird, **dadurch gekennzeichnet, daß** der oberflächliche Korrosionsschutz im wesentlichen nur auf den Außenflächen (1) des Preßfittings (2) aufgebracht ist, während der das Drahtseil (3) aufnehmende Kanal (4) mindestens weitgehend von diesem Korrosionsschutz freigehalten ist.

2. Preßfitting nach Anspruch 1, **dadurch gekennzeichnet, daß** der Kanal (4) an dem Ende, an dem das Drahtseil (3) aus dem Kanal (4) austritt, einen äußeren rohrförmigen Teil (10) aufweist, dessen Innenfläche den oberflächlichen Korrosionsschutz besitzt.

3. Preßfitting nach Anspruch 1 und 2, **dadurch gekennzeichnet, daß** der äußere rohrförmige Teil (10) einen etwas größeren Innendurchmesser aufweist als der Kanal (4).

4. Preßfitting nach Anspruch 1 oder 2, **dadurch gekennzeichnet, daß** der Kanal (4) eine Beschichtung (12) mit scharfkantigem, feinkörnigem Material aufweist.

5. Preßfitting nach Anspruch 4, **dadurch gekennzeichnet, daß** das scharfkantige, feinkörnige Material Korundpulver ist.

6. Preßfitting nach Anspruch 4, **dadurch gekennzeichnet, daß** das scharfkantige, feinkörnige Material Quarzsand ist.

7. Verfahren zur Herstellung eines Preßfittings aus Stahl zur Verbindung mit einem Drahtseil, wobei der Preßfitting einen Kanal aufweist, der mindestens einen Strang eines Drahtseils aufnimmt und der Preßfitting einen oberflächlichen Korrosionsschutz besitzt, der dadurch gewonnnen ist, daß der Preßfitting vor dem verpressen mit dem Drahtseil zunächst feuerverzinkt und anschließend in eine schmelzflüssige, eutektische Legierung von Zink und ca. 5 % Aluminium eingetaucht wird, **dadurch gekennzeichnet, daß** der oberflächliche Korrosionsschutz zunächst im wesentlichen auf allen Flächen des Preßfittings aufgebracht wird und daß anschließend der oberflächliche Korrosionsschutz im Kanal durch eine spanende Bearbeitung mindestens weitgehend entfernt wird.

8. Verfahren zur Herstellung eines Preßfittings aus Stahl zur Verbindung mit einem Drahtseil, wobei der Preßfitting einen Kanal aufweist, der mindestens einen Strang des Drahtseils aufnimmt und der Preßfitting einen Oberflächenkorrosionsschutz besitzt, der dadurch gewonnen ist, daß der Preßfitting vor dem Verpressen mit dem Drahtseil zunächst feuerverzinkt und anschließend in eine schmelzflüssige, eutektische Legierung von Zink und ca. 5 % Aluminium eingetaucht wird, **dadurch gekennzeichnet, daß** der Kanal zur Aufnahme des Drahtseils erst nach dem Aufbringen des Oberflächenschutzes auf den Preßfitting durch spanende Bearbeitung in den Preßfitting eingebracht wird.

## Claims

1. Press fitting made of steel for establishing a connection of the press fitting with a wire rope, the press fitting being provided with a channel which receives at least one strand of the wire rope, and the press fitting having a surface corrosion protection which is obtained by firstly, before pressing the fitting to the wire rope, hot galvanising the press fitting and then dipping it into a molten, eutectic alloy of zinc and about 5 % aluminium, **characterised in that the** surface corrosion protection is deposited substantially only on the outer surfaces (1) of the press fitting (2) and the channel (4), which receives the wire rope (3), is at least largely kept free from this corrosion protection.

2. Press fitting according to claim 1, **characterised in that** the channel (4) is provided at the end where the wire rope (3) emerges from the channel (4) with an outer tube-like part (10) the inner surface of which is provided with the surface corrosion protection.

3. Press fitting according to claim 1 and 2, **characterised in that** the outer tube-like part (10) has a slightly larger inside diameter than the channel (4).

4. Press fitting according to claim 1 or 2, **characterised in that** the channel (4) is provided with a coating (12) of sharp-edged, fine-grained material.

5. Press fitting according to claim 4, **characterised in that** the sharp-edged, fine-grained material is corundum powder.

6. Press fitting according to claim 4, **characterised in that** the sharp-edged, fine-grained material is silica sand.

7. Method for producing a press fitting made of steel for connection with a wire rope the press fitting being provided with a channel which receives at least one strand of a wire rope, and the press fitting having a surface corrosion protection which is obtained by firstly, before pressing the press fitting to the wire rope, hot galvanising the press fitting and then dipping it into a molten, eutectic alloy of zinc and about 5 % aluminium, **characterised in that** the surface corrosion protection is firstly deposited substantially on all surfaces of the press fitting and then the surface corrosion protection in the channel is removed at least largely by cutting machining.

8. Method for producing a press fitting made of steel for connection with a wire rope, the press fitting being provided with a channel which receives at least one strand of the wire rope, and the press fitting having a surface corrosion protection which is obtained by firstly, before the press fitting is pressed to the wire rope, hot galvanising the press fitting and then dipping it into a molten alloy of zinc and about 5 % aluminium, **characterised in that** the channel for receiving the wire rope is placed into the press fitting after the deposition of the surface protection on the press fitting by means of cutting machining.

## Revendications

1. Manchon de raccordement en acier permettant de faire une connexion entre cet organe de raccordement et un câble en acier, le manchon comportant un canal recevant au moins un des brins du câble en acier et possédant une couche surfacique anti-corrosion, réalisée par un zingage à chaud puis par un trempage dans un alliage eutectique en fusion constitué de zinc et d'environ 5% d'aluminium préalablement à son coincement sur le câble en acier, **caractérisé en ce que** la couche surfacique anti-corrosion n'est essentiellement appliquée que sur les surfaces extérieures (1) du manchon de raccordement (2) et **en ce que** le canal (4) recevant le câble en acier (3) reste pratiquement dépourvu de cette couche anti-corrosion.

2. Manchon de raccordement selon la revendication 1, **caractérisé en ce que** le canal (4) possède au niveau de la sortie du câble en acier (3) de ce manchon (4) un prolongement en forme de tube (10) dont les surfaces intérieures sont protégées par cette couche surfacique anti-corrosion.

3. Manchon de raccordement selon les revendications 1 et 2, **caractérisé en ce que** le prolongement en forme de tube (10) possède un diamètre intérieur légèrement plus grand que celui du canal (4).

4. Manchon de raccordement selon la revendication 1 ou 2, **caractérisé en ce que** le canal (4) est recouvert d'une couche (12) faite en un matériau constitué de grains fins coupants.

5. Manchon de raccordement selon la revendication 4, **caractérisé en ce que** le matériau en grains fins abrasifs est une poudre d'alumine.

6. Manchon de raccordement selon la revendication 4, **caractérisé en ce que** le matériau en grains fins abrasifs est une poudre de quartz.

7. Procédé de fabrication d'un manchon de raccordement en acier permettant de faire une connexion entre cet organe de raccordement et un câble en acier, le manchon comportant un canal recevant au moins un des brins du câble en acier et possédant une couche surfacique anti-corrosion, réalisée par un zingage à chaud puis par un trempage dans un alliage eutectique en fusion constitué de zinc et d'environ 5% d'aluminium préalablement à son coincement sur le câble en acier, **caractérisé en ce que** la couche surfacique anti-corrosion est préalablement appliquée sur toutes les surfaces du manchon de raccordement, puis en grande partie éliminée au niveau du canal par un usinage avec un outil coupant.

8. Procédé de fabrication d'un manchon de raccordement en acier permettant de faire une connexion entre cet organe de raccordement et un câble en acier, le manchon comportant un canal recevant au moins un des brins du câble en acier et possédant une couche surfacique anti-corrosion, réalisée par un zingage à chaud puis par un trempage dans un alliage eutectique en fusion constitué de zinc et d'environ 5% d'aluminium préalablement à son coincement sur le câble en acier, **caractérisé en ce que** le canal recevant le câble en acier n'est réalisé par un usinage avec un outil coupant qu'après application de la couche surfacique de protection sur le manchon de raccordement.
